(19) Europäisches Patentamt
European Patent Office
Office européen des brevets

(11) **EP 2 439 863 B1**

(12) **EUROPEAN PATENT SPECIFICATION**

(45) Date of publication and mention
of the grant of the patent:
**13.03.2019 Bulletin 2019/11**

(51) Int Cl.:
*H04L 25/03* (2006.01)    *H04B 1/7105* (2011.01)
*H04B 17/00* (2015.01)    *H04B 7/08* (2006.01)

(21) Application number: **10791397.2**

(22) Date of filing: **26.05.2010**

(86) International application number:
**PCT/CN2010/073278**

(87) International publication number:
**WO 2010/148891 (29.12.2010 Gazette 2010/52)**

(54) **JOINT DETECTION METHOD AND DEVICE**

VERBINDUNGSERKENNUNGSVERFAHREN UND -VORRICHTUNG

PROCÉDÉ ET DISPOSITIF DE DÉTECTION CONJOINTE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **15.12.2009 CN 200910259260**

(43) Date of publication of application:
**11.04.2012 Bulletin 2012/15**

(73) Proprietor: **ZTE Corporation
Shenzhen, Guangdong 518057 (CN)**

(72) Inventor: **CHEN, Liang
Shenzhen
Guangdong 518057 (CN)**

(74) Representative: **Manitz Finsterwald Patentanwälte
PartmbB
Martin-Greif-Strasse 1
80336 München (DE)**

(56) References cited:
CN-A- 1 604 512      CN-A- 101 056 117
CN-A- 101 527 919    US-A- 6 144 710
US-A1- 2008 123 719

- LOZANO A ET AL: "Adaptive MLSE receiver for dual-band IS-136 TDMA", PERSONAL, INDOOR AND MOBILE RADIO COMMUNICATIONS, 1997. WAVES OF THE YEAR 2000. PIMRC '97., THE 8TH IEEE INTERNATIONAL SYMPOSIUM ON HELSINKI, FINLAND 1-4 SEPT. 1997, NEW YORK, NY, USA,IEEE, US, vol. 3, 1 September 1997 (1997-09-01), pages 816-820, XP010247561, DOI: 10.1109/PIMRC.1997.626999 ISBN: 978-0-7803-3871-5
- JIUNN-TSAIR CHEN ET AL: "Joint MLSE Receiver with Dynamic Channel Description", IEEE JOURNAL ON SELECTED AREAS IN COMMUNICATIONS, IEEE SERVICE CENTER, PISCATAWAY, US, vol. 16, no. 9, 1 December 1998 (1998-12-01), XP011054870, ISSN: 0733-8716
- HENDRIK SCHOENEICH AND PETER A HOEHER: "Single Antenna Cochannel Interference Cancellation in Asynchronous TDMA Systems", PROCEEDINGS OF BAIONA WORKSHOP ON SIGNAL PROCESSING INCOMMUNICATIONS, XX, XX, 8 September 2003 (2003-09-08), pages 157-162, XP002290137,
- RANTA P A ET AL: "CO-CHANNEL INTERFERENCE CANCELLING RECEIVER FOR TDMA MOBILE SYSTEMS", COMMUNICATIONS - GATEWAY TO GLOBALIZATION. PROCEEDINGS OF THE INTERNATIONAL CONFERENCE ON COMMUNICATIONS. SEATTLE, JUNE 18 - 22, 1995; [PROCEEDINGS OF THE INTERNATIONAL CONFERENCE ON COMMUNICATIONS (ICC)], NEW YORK, IEEE, US, vol. 1, 18 June 1995 (1995-06-18), pages 17-21, XP000532964, ISBN: 978-0-7803-2487-9

EP 2 439 863 B1

**Description**

Technical Field

The present invention relates to the technical field of mobile communication, and in particular, to a method and device for joint detection.

Background Art

With continuous increase of GSM users, operators are facing the pressure of system capacity expansion. Cell split is a conventional method for increasing the capacity of a GSM system. The VAMOS (Voice services over Adaptive Multi-user channels on One Slot) technology being established by the 3GPP, which is a revolutionary capacity expansion means, has been paid wide attention in the industry as an important part of numerous evolution technologies of the GSM.
The VAMOS is essentially different from the conventional capacity expansion method in that it can carry two irrelevant users in two paths in the same timeslot at the same frequency point simultaneously to achieve the purpose of expanding the capacity doubly. However, the current uplink demodulation algorithm has only single user detection function, thus it is not competent for simultaneously demodulating mutually interfered information of users in two paths.
The existing technology for user detection, such as SIC (Successive Interference Cancellation), uses a single user detection algorithm capable of suppressing interference to detect signals of the two users successively. Specifically, in the received uplink signals, when user 0 is demodulated from the uplink signals, signals of user 1 are used as interference signals, thus, they will have some influences on demodulation performance of user 0. Likewise, when user 1 is demodulated, signals of user 0 are also regarded as co-frequency interference, causing loss in demodulation performance of user 1 as well.
It can be seen that although the existing method for user detection is able to demodulate the information of the users in two paths, because it can only detect the signals of the two users successively and there may be loss in the demodulation performance during the detection, the estimated signals are not accurate enough.
The document "LOZANO A ET AL: Adaptive MLSE receiver for dual-band IS-136 TDMA, PIMRC' 97., THE 8TH IEEE INTERNATIONAL SYMPOSIUM ON HELSINKI, FINLAND 1-4 SEPT. 1997, VOL. 3, 1 September 1997 (1997-09-01), pages 816-820" presents a robust MLSE receiver with Per-Survivor-Processing (PSP) which meets the TIA requirements in both bands and is scalable in terms of performance versus complexity. This document discloses the features of the preamble of the independent claims.
The document "JIUNN-TSAIR CHEN ET AL: Joint MLSE Receiver with Dynamic channel description, IEEE JOURNAL ON SELECTED AREAS IN COMMUNICATIONS, IEEE SERVICE CENTER, PISCAT WAY, US, vol. 16, no.9, 1 December 1998 (1998-12-01)" proposes a joint MLSE algorithm that uses a dynamic channel description.
The document "HENDRIK SCHOENEICH AND PERTER A HOEHER: Signal Antenna Cochannel Interference Cancellation in Asynchronous TDMA Systems, PROCEEDINGS OF BAIONA WORKSHOP ON SINGAL PROCESSING INCOMMUNICATIONS, 8 September 2003 (2003-09-08), pages 157-162" proposes a receiver based on an iterative algorithm for joint channel estimation and cochannel interference cancellation suitable for time-division multiple-access cellular radio system.
The document "RANTA P A ET AL: CO-CHANNEL INTERFERENCE CANCELLING RECEIVER FOR TDMA MOBILE SYSTEMS, COMMUNICATIONS INTERNATIONAL CONFERENCE ON COMMUNICATIONS SEATTLE, JUNE 18-22, 1995; US, vol. 1, 18, June 1995 (1995-06-18), pages 17-21" proposes a method for co-channel interference cancellation in TDMA mobile system exploiting the characteristics of mobile channels.
The document US 6 144 710 A discloses a joint maximum likelihood sequence estimator with dynamic channel description.

Summary of the Invention

Embodiments of the present invention provide a method and a device for joint detection so as to achieve optimal demodulation performance and increase the accuracy of signal sequence estimation during synchronous demodulation of signals of multiple users.
In order to achieve the above object, the technical scheme of the present invention is defined in the independent claims.
Embodiments not covered by the scope of the claims should be understood as examples useful for understanding the invention.

Brief Description of Drawings

FIG. 1 illustrates a state transition diagram according to an embodiment of the present invention;
FIG. 2 is a flowchart of a method for joint detection according to an embodiment of the present invention;
FIG. 3 is a flowchart of a method for joint detection according to the first embodiment of the present invention; and
FIG. 4 is a block diagram of a device for joint detection according to an embodiment of the present invention.

Preferred Embodiments of the Present Invention

A method for joint detection in accordance with an embodiment of the present invention, which is a joint detection technique based on MLSE (Maximum Likelihood Sequence Estimation), is able to make full use of a priori information of users in each path, while obtaining a signal sequence estimation of each desired user.

The technique used in the embodiment of the present invention is a JMLSE (Joint Maximum Likelihood Sequence Estimation) or JD (Joint Detection) algorithm. The principle of this technique will be introduced briefly below by taking two users as an example.

A signal model for joint detection is shown in Formula (1):

$$y(k) = \sum_{n=0}^{\infty} x^{(0)}(k-n)h^{(0)}(n) + \sum_{n=0}^{\infty} x^{(1)}(k-n)h^{(1)}(n) + n(k) \qquad (1)$$

where $y(k)$ represents a received mixed signal containing information of user 0 and user 1; $x^{(0)}(k)$ and $x^{(1)}(k)$ represent information of user 0 and user 1 respectively, and $h^{(0)}(n)$ and $h^{(1)}(n)$ represent channel impulse responses corresponding to user 0 and user 1 respectively, $n$ is indefinite theoretically, i.e., $n \propto +\infty$.

The cost function based on the MLSE rules obtained from Formula (1) is shown in Formula (2):

$$J'_{ML} = \int_{t\in I} \left| y(t) - \left[ \sum_{n=0}^{\infty} r_n^{(0)} h^{(0)}(t-nT) + \sum_{n=0}^{\infty} r_n^{(1)} h^{(1)}(t-nT) \right] \right|^2 dt \qquad (2)$$

Thus, a transmitting original signal sequence $r$ is estimated on the premise that the cost function $J'_{ML}$ is minimum.

Finally, a recursion formula of cumulative metric can be obtained, as shown in Formula (3):

$$J_k(s_k)$$
$$= J_{k-1}(s_{k-1}) + \mathrm{Re}\left\{ r_k^{(0)^*}\left[ Z_k^{(0)} - \sum_{l=1}^{L-2}\left( r_{k-l}^{(0)} S_l^{(00)} \right) \right] - r_k^{(0)^*} r_{k-(L-1)}^{(0)} S_{L-1}^{(00)} \right\}$$
$$+ \mathrm{Re}\left\{ r_k^{(1)^*}\left[ Z_k^{(1)} - \sum_{l=1}^{L-2}\left( r_{k-l}^{(1)} S_l^{(11)} \right) \right] - r_k^{(1)^*} r_{k-(L-1)}^{(1)} S_{L-1}^{(11)} \right\} \qquad (3)$$
$$- \mathrm{Re}\left( \sum_{l=1}^{L-1} r_k^{(0)^*} r_{k-l}^{(1)} S_l^{(01)} + \sum_{l=1}^{L-1} r_{k-l}^{(0)^*} r_k^{(1)} S_l^{(10)^*} + r_k^{(0)^*} r_k^{(1)} S_0^{(01)} \right)$$

$S_l^{(00)} = \int_{t\in I} h^{(0)^*}(t-lT)h^{(0)}(t)dt$, a channel autocorrelation signal of user 0; $S_l^{(11)} = \int_{t\in I} h^{(1)^*}(t-lT)h^{(1)}(t)dt$, a channel autocorrelation signal of user 1; $S_l^{(01)} = \int_{t\in I} h^{(0)^*}(t-lT)h^{(1)}(t)dt$, a channel cross-correlation signal of user 0 and user 1; $S_l^{(10)} = \int_{t\in I} h^{(1)^*}(t-lT)h^{(0)}(t)dt$, a channel cross-correlation signal of user 1 and user 0;

$$Z_k^{(0)} = \int_{t \in I} h^{(0)^*}(t - kT)y(t)dt$$ , a matched filtering output signal of user 0; $$Z_k^{(1)} = \int_{t \in I} h^{(1)^*}(t - kT)y(t)dt$$ , a matched filtering output signal of user 1.

Then a branch metric may be defined as shown in Formula (4):

$$
\begin{aligned}
Branch\_Metric = \mathrm{Re}\left\{ r_k^{(0)^*}\left[ Z_k^{(0)} - \sum_{l=1}^{L-2}\left( r_{k-l}^{(0)}S_l^{(00)} \right) \right] - r_k^{(0)^*} r_{k-(L-1)}^{(0)} S_{L-1}^{(00)} \right\} \\
+ \mathrm{Re}\left\{ r_k^{(1)^*}\left[ Z_k^{(1)} - \sum_{l=1}^{L-2}\left( r_{k-l}^{(1)}S_l^{(11)} \right) \right] - r_k^{(1)^*} r_{k-(L-1)}^{(1)} S_{L-1}^{(11)} \right\} \qquad (4) \\
- \mathrm{Re}\left( \sum_{l=1}^{L-1} r_k^{(0)^*} r_{k-l}^{(1)} S_l^{(01)} + \sum_{l=1}^{L-1} r_{k-l}^{(0)^*} r_k^{(1)} S_l^{(10)^*} + r_k^{(0)^*} r_k^{(1)} S_0^{(01)} \right)
\end{aligned}
$$

At this point, the complexity degree of JMLSE is $M = 2^{N(L-1)}$, $N$ is the number of users, here $N=2$, and $L$ is the length of a dispersion channel. Herein, the length of the received data is defined as $Len$, i.e., the value range of $k$ in Formula (1) is 0~$Len$-1, a joint state of the two users is defined as $State_k(r_k^{(0)}, r_{k-1}^{(0)}, ..., r_{k-(L-3)}^{(0)}, r_{k-(L-2)}^{(0)}, r_k^{(1)}, r_{k-1}^{(1)}, ..., r_{k-(L-3)}^{(1)}, r_{k-(L-2)}^{(1)})$, and the joint state contains a signal sequence estimation of each dispersion channel of each user at a corresponding moment, where $r_k^{(0)}$, $r_k^{(1)}$ represent signal sequence estimations of the two users at the $k^{th}$ moment respectively, user 0 is at the high ($L$-1) bit and user 1 is at the low ($L$-1) bit, both bits form collectively a number of 2($L$-1) bits represented by binary, i.e., a state number $State_k$. Thus, the value range of $State_k$ is 0-$2^{2(L-1)}$-1, the initial state is set as $State_k(r_k^{(0)}, r_{k-1}^{(0)}, ..., r_{k-(L-3)}^{(0)}, r_{k-(L-2)}^{(0)}, r_k^{(1)}, r_{k-1}^{(1)}, ..., r_{k-(L-3)}^{(1)}, r_{k-(L-2)}^{(1)}) = 0 = (00...00b)$, and the final state is set as $State_k(r_k^{(0)}, r_{k-1}^{(0)}, ......, r_{k-(L-3)}^{(0)}, r_{k-(L-2)}^{(0)}, r_k^{(1)}, r_{k-1}^{(1)}, ..., r_{k-(L-3)}^{(1)}, r_{k-(L-2)}^{(1)}) = 2^{2(L-1)}$-1=(11.... 11$b$). For each state shift, $State_{k-1}(r_{k-1}^{(0)}, r_{k-2}^{(0)}, ..., r_{k-(L-2)}^{(0)}, r_{k-(L-1)}^{(0)}, r_{k-1}^{(1)}, r_{k-2}^{(1)}, ..., r_{k-(L-2)}^{(1)}, r_{k-(L-1)}^{(1)}) \rightarrow State_k(r_k^{(0)}, r_{k-1}^{(0)}, ..., ...r_{k-(L-3)}^{(0)}, r_{k-(L-2)}^{(0)}, r_k^{(1)}, r_{k-1}^{(1)}, ..., r_{k-(L-3)}^{(1)}, r_{k-(L-2)}^{(1)})$, only $r_k^{(0)}, r_k^{(1)}$ and $r_{k-(L-1)}^{(0)}, r_{k-(L-1)}^{(1)}$ change. ($r_k^{(0)}, r_k^{(1)}$) has four possible value combinations, (0, 0), (0, 1), (1, 0) and (1, 1), and ($r_{k-(L-1)}^{(0)}, r_{k-(L-1)}^{(1)}$) also has four possible value combinations, (0, 0), (0, 1), (1, 0) and (1, 1).

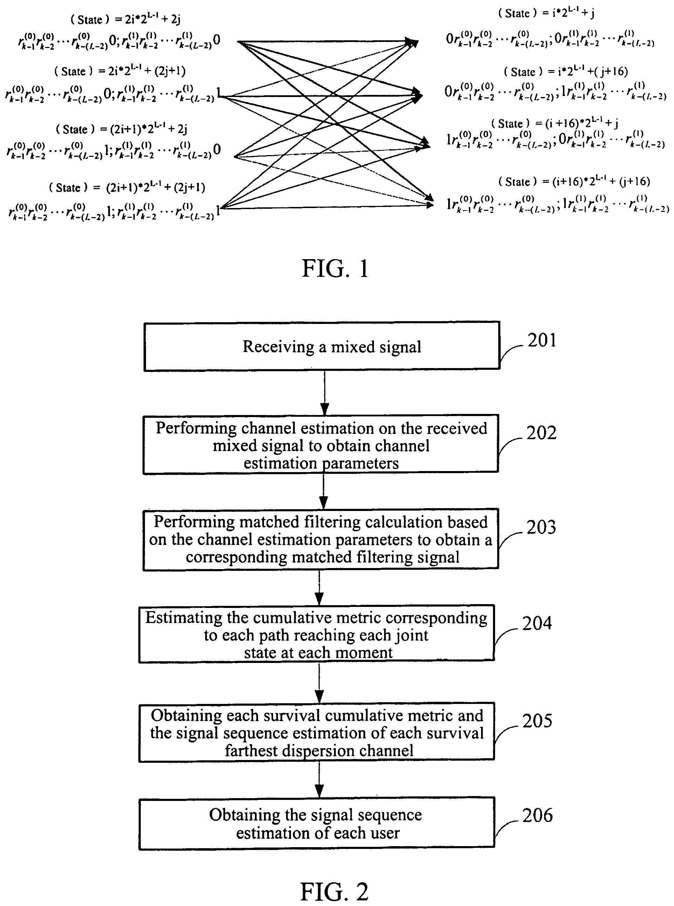

Using this feature, as in a state transition diagram shown in FIG. 1, there are in total 16 branch metrics when all states on the left are shifted to all states on the right, wherein, the states shown on the left in FIG. 1 are source states, and the branch metrics are obtained from the cost function of the Maximum Likelihood Estimation, i.e., the above formula (4). The 16 branch metrics are divided into 4 groups, i.e., four branches reaching each state on the right are combined into one group. Then, the maximum branch is selected as a survival path from the four groups, each group being one unit, and sequence estimations $r_{k-(L-1)}^{(0)}$ and $r_{k-(L-1)}^{(1)}$ of the farthest dispersion channels of the signals of the two users in the source state corresponding to the survival path at this moment and soft information of the two users are stored, i.e., the sequence estimations of the survival farthest dispersion channels corresponding to the signals of the two users in a target state are $r_{k-(L-1)}^{(0)}$ and $r_{k-(L-1)}^{(1)}$. A cumulative metric corresponding to the survival path is used as a survival cumulative metric of the current state.

All states of the $Len$ symbols to be estimated are traversed, and then a maximum cumulative metric is found from all survival cumulative metrics corresponding to the current moment $k$, and the state corresponding to the maximum cumulative metric is obtained. Using the value of this state as an index, the signal sequence estimations of the survival farthest dispersion channels corresponding to the two users at the moment of $k$ and their respective soft information can be obtained, and meanwhile, signal sequence estimations $r_k^{(0)}$ and $r_k^{(1)}$ of the nearest dispersion channels of the two users in the current state are used as signal sequence estimations of the two users at the current moment;

The two indexed signal sequence estimations $r_{k-(L-1)}^{(0)}$ and $r_{k-(L-1)}^{(1)}$ of the survival farthest dispersion channels corresponding to the two users may be used to update the state number, and then the new state is used as an index to obtain the signal sequence estimations of the survival farthest dispersion channels corresponding to the two users at the $(k-1)^{th}$ moment and their respective soft information, together with signal sequence estimations $r_k^{(0)}$ and $\mathbf{r_k}^{(1)}$ in the new state at the current moment. The process is repeated in this way, until it returns back to the first symbol and then ends. Thus, signal sequence estimations of signals of multiple users at each moment are completed, and the obtained signal sequence estimations at each moment are output to obtain the sequence estimations of two users and the soft information used for decoding.

Referring to FIG. 2, in an embodiment of the present invention, the process of joint detection comprises the following steps.

Step 201, a mixed signal is received.

Herein, the mixed signal may contain information of two or more users, or contain information of one user and other noises. Therefore, the embodiment of the present invention is applicable to not only joint detection for multiple users, but also a scene of interference suppression.

Step 202, channel estimation is performed on the received mixed signal to obtain channel estimation parameters.

Step 203, matched filtering calculation is performed based on the channel estimation parameters to obtain corresponding matched filtering signals.

Herein, the obtained matched filtering signals are different depending on different channel estimation parameters, the matched filtering signals includes a channel autocorrelation signal of each user, a channel cross-correlation signal between each user, and a signal matched filtering output signal of each user.

Step 204, a cumulative metric corresponding to each path reaching each joint state at each moment is estimated based on the obtained matched filtering signal.

Herein, the joint state of all users is set, for example, the joint state of two users is $State_k(r_k^{(0)}, r_{k-1}^{(0)}, ..., r_{k-(L-3)}^{(0)}, r_{k-(L-2)}^{(0)}, r_k^{(1)}, r_{k-1}^{(1)}, ..., r_{k-(L-3)}^{(1)}, r_{k-(L-2)}^{(1)})$. The joint state contains a signal sequence estimation of each dispersion channel of each user at a corresponding moment. User 0 is at the high ($L$-1) bit and user 1 is at the low ($L$-1) bit, both bits form collectively a number of 2($L$-1) bits represented by binary, i.e., a state number $State_k$. Of course, the joint state may also be $State_k(r_k^{(1)}, r_{k-1}^{(1)}, ..., r_{k-(L-3)}^{(1)}, r_{k-(L-2)}^{(1)}, r_k^{(0)}, r_{k-1}^{(0)}, ..., r_{k-(L-3)}^{(0)}, r_{k-(L-2)}^{(0)}))$, user 1 is at the high ($L$-1) bit and user 0 is at the low ($L$-1) bit.

According to the above JMLSE principle, the obtained matched filtering signal is substituted into the Formula (4) to perform Joint Maximum Likelihood Sequence Estimation (JMLSE) and obtain a branch metric of each path reaching each joint state at each moment.

The branch metric of each path is superimposed to a cumulative metric of a source joint state corresponding to the path to obtain a cumulative metric corresponding to each path reaching each joint state at each moment. The initial state of each path is the source joint state corresponding to the path. For example, as shown in FIG. 1, there are four paths reaching each state shown on the right, i.e., each joint state shown on the left may reach each joint state shown on the right, the joint state shown on the left corresponding to each path is the source joint state corresponding to the path.

In this embodiment of the present invention, the cumulative metric corresponding to each path reaching one joint state may be estimated at a time, or the cumulative metrics corresponding to each path reaching a plurality of joint states may be estimated at a time. As shown in FIG. 1, the cumulative metric corresponding to each path reaching four joint states are estimated at a time.

Step 205, a survival cumulative metric of each joint state at each moment and a signal sequence estimation of the survival farthest dispersion channel corresponding to each user in each joint state is obtained based on each estimated cumulative metric.

Herein, the maximum cumulative metric among cumulative metrics of all paths reaching the current joint state is determined as a survival cumulative metric of the current joint state, the path corresponding to the survival cumulative metric is determined as a survival path, and the source joint state corresponding to the survival path is a survival state. A signal sequence signal of the farthest dispersion channel of each user in the survival state is determined as the signal sequence signal of the survival farthest dispersion channel corresponding to each user in the current joint state.

Thus, the signal sequence signal of the survival farthest dispersion channel corresponding to each user in each joint state at each moment and the survival cumulative metric of each joint state are obtained to establish a corresponding relationship between the moment, the joint state, the signal sequence estimation of the survival farthest dispersion channel corresponding to each user and the survival cumulative metric.

Step 206, the signal sequence estimation of each user is obtained based on the obtained survival cumulative metric of each joint state at each moment and the signal sequence signal of the survival farthest dispersion channel corresponding to each user in each joint state.

Herein, the last moment is used as the current moment, and the joint state corresponding to the maximum survival cumulative metric at the current moment is searched from the above corresponding relationship to determine the searched joint state as the current joint state.

A signal sequence estimation of the nearest dispersion channel corresponding to each user in the determined current joint state is used as a signal sequence estimation of a corresponding user at the current moment, and the current joint state is updated based on the signal sequence estimation of the survival farthest dispersion channel corresponding to each user in the current joint state to obtain the updated joint state.

Then at the next current moment, the updated joint state is used as the current joint state, the above steps are repeated until the signal sequence estimation of each user at each moment is obtained, and the signal sequence estimation of each user at each moment is output in combination to obtain the signal sequence estimation of each user.

The updating the current joint state based on the signal sequence estimation of the survival farthest dispersion channel corresponding to each user in the current joint state comprises:

shifting the current joint state once from far to near based on the dispersion channel; using the signal sequence estimation of the survival farthest dispersion channel corresponding to each user in the obtained current joint state as the signal sequence estimation of the farthest dispersion channel corresponding to each user in the current joint state to obtain a new joint state.

Examples of the present invention will be further described in detail below in conjunction with the accompanying drawings.

In Example one, the number of users $N$=2, i.e., user 0 and user 1, the length of a dispersion channel $L$=6, the length of the received data $Len$=156. A joint state of the two users is $State_k(r_k^{(0)}, r_{k-1}^{(0)}, ..., r_{k-(L-3)}^{(0)}, r_{k-(L-2)}^{(0)}, r_k^{(1)}, r_{k-1}^{(1)}, ..., r_{k-(L-3)}^{(1)}, r_{k-(L-2)}^{(1)})$. The joint state contains a signal sequence estimation of each dispersion channel of the two users at a corresponding moment. User 0 is at the high ($L$-1) bit and user 1 is at the low ($L$-1) bit, both bits form collectively a number of 2($L$-1) bits represented by binary, i.e., a state number $State_k$. Thus, the value range of $State_k$ is 0-1023.

Then, the above Formula (3) and Formula (4) may be simplified as corresponding Formula (5) and Formula (6).

$$
\begin{aligned}
J_k(s_k) &= J_{k-1}(s_{k-1}) + \mathrm{Re}\left\{ r_k^{(0)^*}\left[ Z_k^{(0)} - \sum_{l=1}^{4}\left( r_{k-l}^{(0)} S_l^{(00)} \right) \right] - r_k^{(0)^*} r_{k-5}^{(0)} S_5^{(00)} \right\} \\
&+ \mathrm{Re}\left\{ r_k^{(1)^*}\left[ Z_k^{(1)} - \sum_{l=1}^{4}\left( r_{k-l}^{(1)} S_l^{(11)} \right) \right] - r_k^{(1)^*} r_{k-5}^{(1)} S_5^{(11)} \right\} \\
&- \mathrm{Re}\left( \sum_{l=1}^{5} r_k^{(0)^*} r_{k-l}^{(1)} S_l^{(01)} + \sum_{l=1}^{5} r_{k-l}^{(0)^*} r_k^{(1)} S_l^{(10)^*} + r_k^{(0)^*} r_k^{(1)} S_0^{(01)} \right)
\end{aligned}
\tag{5}
$$

$$
\begin{aligned}
Branck\_Metric &= \mathrm{Re}\left\{ r_k^{(0)^*}\left[ Z_k^{(0)} - \sum_{l=1}^{4}\left( r_{k-l}^{(0)} S_l^{(00)} \right) \right] - r_k^{(0)^*} r_{k-5}^{(0)} S_5^{(00)} \right\} \\
&+ \mathrm{Re}\left\{ r_k^{(1)^*}\left[ Z_k^{(1)} - \sum_{l=1}^{4}\left( r_{k-l}^{(1)} S_l^{(11)} \right) \right] - r_k^{(1)^*} r_{k-5}^{(1)} S_5^{(11)} \right\} \\
&- \mathrm{Re}\left( \sum_{l=1}^{5} r_k^{(0)^*} r_{k-l}^{(1)} S_l^{(01)} + \sum_{l=1}^{5} r_{k-l}^{(0)^*} r_k^{(1)} S_l^{(10)^*} + r_k^{(0)^*} r_k^{(1)} S_0^{(01)} \right)
\end{aligned}
\tag{6}
$$

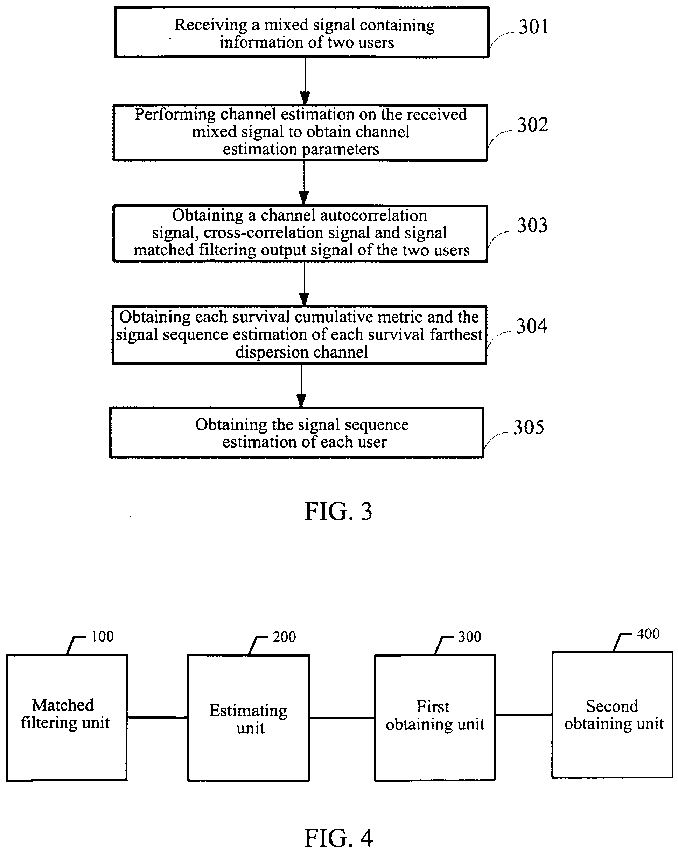

Thus, referring to FIG. 3, the process of joint detection comprises the following steps.

Step 301, a mixed signal containing information of two users is received.

The length of the received data is also $Len$, i.e., $y$=[$y$(0), $y$(1), ......, $y$(155)].

Step 302, channel estimation is performed on the received mixed signal to obtain channel estimation parameters.

Herein, firstly the signal is reversed, $y_{deroted}(k) = y(k)j^{-k}$; then bit synchronization is implemented, and the respective time advance, $TA_0$, $TA_1$, of users 0 and 1 are calculated; finally, channel estimation is performed to obtain the channel estimation parameters. Herein, $\hat{H} = (M^H M)^{-1} M^H Y$, wherein,

$$
\mathbf{Y} = [y(61+L-1), y(61+L), y(61+L+1), \cdots, y(61+N-1)]^{\mathbf{T}};
$$

$$
\mathbf{M} = [\mathbf{M}^{(0)}, \mathbf{M}^{(1)}] = \begin{bmatrix}
m^{(0)}(L-1) & m^{(0)}(L-2) & \cdots & m^{(0)}(0) & m^{(1)}(L-1) & m^{(1)}(L-2) & \cdots & m^{(1)}(0) \\
m^{(0)}(L) & m^{(0)}(L-1) & \cdots & \cdots & m^{(1)}(L) & m^{(1)}(L-1) & \cdots & \cdots \\
\vdots & \vdots & \vdots & \vdots & \vdots & \vdots & \vdots & \vdots \\
m^{(0)}(N-1) & m^{(0)}(N-2) & \cdots & m^{(0)}(N-L) & m^{(1)}(N-1) & m^{(1)}(N-2) & \cdots & m^{(1)}(N-L)
\end{bmatrix};
$$

$$
\mathbf{H}^{(0)} = [h^{(0)}(0), h^{(0)}(1), \cdots, h^{(0)}(L-1)]^{\mathbf{T}};
$$

$$
\mathbf{H}^{(1)} = [h^{(1)}(0), h^{(1)}(1), \cdots, h^{(1)}(L-1)]^{\mathbf{T}};
$$

$$
\mathbf{H} = \left[ \mathbf{H}^{(0)\mathbf{T}}, \mathbf{H}^{(1)\mathbf{T}} \right]^{\mathbf{T}} = [h^{(0)}(0), h^{(0)}(1), \cdots, h^{(0)}(L-1), h^{(1)}(0), h^{(1)}(1), \cdots, h^{(1)}(L-1)]^{\mathbf{T}}.
$$

Step 303, matched filtering calculation is performed based on the obtained channel estimation parameters, the obtained channel autocorrelation signal, cross-correlation signal and signal matched filtering output signal of the two users being respectively:

$$S_l^{(00)} = \sum_{k=0}^{L-1} h^{(0)}(k) \cdot h^{(0)*}(k-l) \; ;$$

$$S_l^{(11)} = \sum_{k=0}^{L-1} h^{(1)}(k) \cdot h^{(1)*}(k-l) \; ;$$

$$S_l^{(01)} = \sum_{k=0}^{L-1} h^{(1)}(k) \cdot h^{(0)*}(k-l) \; ;$$

$$S_l^{(10)} = \sum_{k=0}^{L-1} h^{(0)}(k) \cdot h^{(1)*}(k-l) \; ;$$

$$Z_k^{(0)} = \sum_{n=0}^{L-1} y_{derotad}(k-n) \cdot h^{(0)*}(n) \; ;$$

$$Z_k^{(1)} = \sum_{n=0}^{L-1} y_{derotad}(k-n) \cdot h^{(1)*}(n) \; .$$

In this example, in the case of a multi-antenna receiving system, multi-antenna combination is required to be performed using the relatively common technique, such as MRC.

Step 304, Joint Maximum Likelihood Sequence Estimation (JMLSE) is performed based on the matched filtering signal to obtain a survival cumulative metric of each joint state at each moment and a signal sequence estimation of the survival farthest dispersion channel corresponding to each user in each joint state.

The specific implementation process is as follows.

4.1. The current moment $K$=0, the initial state $State_k(r_k^{(0)}, r_{k-1}^{(0)}, ..., r_{k-3}^{(0)}, r_{k-4}^{(0)}, r_k^{(1)}, r_{k-1}^{(1)}, ...., r_{k-3}^{(1)}, r_{k-4}^{(1)})$=0.

4.2. As shown in FIG. 1, 16 branch metrics shifting from $State_{2i*32 + 2j}$, $State_{2i*32 + (2j+1)}$, $State_{(2i+1)*32 + 2j}$, $State_{(2i+1)*32 + (2j+1)}$ to $State_{i*32+j}$, $State_{i*32 +(j+16)}$, $State_{(i+16)*32+j}$, $State_{(i+16)*32 + (j+16)}$ are calculated using the above Formula (6).

The 16 branch metrics are divided into four groups, i.e., four states in 1024 states. Specifically, the first group includes four branch metrics shifting from $State_{2i*32 + 2j}$, $State_{2i*32 + (2j+1)}$, $State_{(2i+1)*32 + 2j}$, $State_{(2i+1)*32 + (2j+1)}$ to $State_{i*32 + j}$; the second group includes four branch metrics shifting from $State_{2i*32 + 2j}$, $State_{2i*32 + (2j+1)}$, $State_{(2i+i)*32 + 2j}$, $State_{(2i+1)*32 + (2j+1)}$ to $State_{i*32 +(j+16)}$; the third group includes four branch metrics shifting from $State_{2i*32 + 2j}$, $State_{2i*32 + (2j+1)}$, $State_{(2i+1)*32 + 2j}$, $State_{(2i+1)*32 + (2j+1)}$ to $State_{(i+16)*32 + j}$; and the fourth group includes four branch metrics shifting from $State_{2i*32 + 2j}$, $State_{2i*32 + (2j+1)}$, $State_{(2i+1)*32 + 2j}$, $State_{(2i+1)*32 + (2j+1)}$ to $State_{(i+16)*32 + (j+16)}$. $State_{2i*32 + 2j}$, $State_{2i*32 + (2j+1)}$, $State_{(2i+1)*32 + 2j}$, $State_{(2i+1)*32 + (2j+1)}$ are source joint states.

4.3. The four branch metrics in each group are superimposed to a cumulative metric of a corresponding source joint state to obtain a cumulative metric corresponding to each path in each group.

The cumulative metric corresponding to each path in each group is obtained according to Formula (5), i.e., $J_{k-1}(s_{k-1})$ in Formula (5) is Metirc_Sum[$State_{2i*32 + 2j}$], Metirc_Sum[$State_{2i*32 + (2j+1)}$], Metirc_Sum[$State_{(2i+1)*32 + 2j}$] and Metirc_Sum[$State_{(2i+1)*32 + (2j+1)}$] respectively.

4.4. Cumulative metrics corresponding to all path in all groups are compared with each other, the maximum cumulative metric is determined as a survival cumulative metric in the current joint state, the path corresponding to the survival cumulative metric is determined as a survival path, the source state corresponding to the survival path is determined as a survival state, and signal sequence estimations of the farthest dispersion channels of the two users in the survival state are stored as signal sequence estimations of the survival farthest dispersion channels of the two users in the current state. Herein, the lowest bits $r_{k-(L-1)}^{(0)}$ and $r_{k-(L-1)}^{(1)}$ corresponding to each user in the survival state are stored in Path[$k$, State$_j$].

For example, in FIG. 1, $i$=2, $j$=1, and if among the four paths reaching State$_{593}$, the cumulative metric of the path shifting from State$_{130}$ to State$_{593}$ is greatest, the corresponding relationship between K, State$_{593}$, (0, 0) and Metirc_Sum[State$_{593}$] is stored.

4.5. The state is updated, State$_k$= State$_k$+1, and if State$_k$≤2$^{N(L-1)}$/4, step 4.2 is returned, otherwise, the current moment is updated, $K$=$K$+1, and if $k$≤($Len$+$L$-1), step 4.2 is returned, otherwise, the process ends, the survival cumulative metric of each joint state at each moment, and the signal sequence estimation of the survival farthest dispersion channel corresponding to each user in each joint state are obtained.

In this exmale of the present invention, suirviving cumulative metrics of four states at each moment and the signal sequence estimation of the survival farthest dispersion channel corresponding to each user in each joint state are obtained during each circulation. Thus, the number of times of circulation is greatly reduced, and the speed of calculation is increased.

Step 305, a signal sequence estimation of each user is obtained based on the survival cumulative metric of each joint state at each moment and the signal sequence estimation of the survival farthest dispersion channel corresponding to each user in each joint state. The specific process is as follows.

5.1. The current $K$= $Len$+$L$-1, the maximum survival cumulative metric corresponding to the $K$ is searched, and the state corresponding to the maximum cumulative metric is determined as the current state. For example, when $K$= $Len$+$L$-1, the state corresponding to the maximum survival cumulative metric is State$_{593}$, thus State$_{593}$ is the current state.

5.2. A signal sequence estimation of the nearest dispersion channel corresponding to each user in the current state is used as a signal sequence estimation of a corresponding user at the current moment (herein the most significant bit of each user), which is stored in output sequence buffer areas of Output_HardData0[$k$] and Output_HardData1[$k$] respectively. Then soft information is extracted from SOVA_Data[$k$, State] for storage in Output_SoftData0[$k$] and Output_SoftData1[$k$].

For example, if State$_{593}$ is the current state State$_{593}$=(10010, 10001), the most significant bit of user 0 is "1", and the most significant bit of user 1 is also "1". Thus, they are stored in the output sequence buffer areas of Output_HardData0[$k$] and Output_HardData1[$k$] respectively.

5.3. The value of the current state is shifted to the left, the most significant bit of each user is discarded, and signal sequence estimations of the survival farthest dispersion channels corresponding to the two users in the current state is supplemented into the signal sequence estimation of the farthest dispersion channel of each user, i.e., the least significant bit, to obtain a new state, which is used as the current state.

For example, if State$_{593}$=(10010, 10001) and the signal sequence estimation of the survival farthest dispersion channel of the two users in the state is (0, 0), then the updated sequence is (00100, 00010), i.e., State$_{130}$. Thus, State$_{130}$ is the current state.

5.4. $K$ is updated, i.e., the current $K$=$K$-1, and when $K$>0, step 5.2 is returned, otherwise, step 5.5 is performed, where the signal sequence estimation of each user at the corresponding moment may be obtained.

5.5. The signal sequence estimation of each user at each moment is output and the signal sequence estimation of each user is obtained.

The signal sequence estimation of each user can be obtained by outputting data in the output seqeunce buffer areas of Output_HardData0[$k$] and Output_HardData1[$k$].

According to the above method for joint detection, a device for joint detection can be constructed. As shown in FIG. 4, the device comprises a matched filtering unit 100, an estimating unit 200, a first obtaining unit 300 and a second obtaining unit 400.

The matched filtering unit 100 is configured to receive a matched filtering signal corresponding to a received mixed signal.

The estimating unit 200 is configured to estimate a cumulative metric corresponding to each path reaching each joint state at each moment based on the matched filtering signal; wherein the joint state contains a signal sequence estimation of each dispersion channel of each user at a corresponding moment.

The first obtaining unit 300 is configured to obtain a survival cumulative metric of each joint state at each moment and a signal sequence estimation of a survival farthest dispersion channel corresponding to each user in each joint state based on each estimated cumulative metric.

The second obtaining unit 400 is configured to obtain a signal sequence estimation of each user based on the survival cumulative metric of each joint state at each moment and the signal sequence estimation of the survival farthest dispersion channel corresponding to each user in each joint state.

The estimating unit 200 may comprise a branch metric estimating sub-unit and a cumulative metric estimating sub-unit.

The branch metric estimating sub-unit is configured to perform Joint Maximum Likelihood Sequence Estimation (JMLSE) based on each matched filtering signal to obtain a branch metric of each path reaching each joint state at each moment.

The cumulative metric estimating sub-unit is configured to superimpose the branch metric of each path to a cumulative metric of a source joint state corresponding to the path to obtain the cumulative metric corresponding to each path reaching each joint state at each moment.

The first obtaining unit 300 comprises a survival cumulative metric determining sub-unit and a survival signal sequence estimation determining sub-unit.

The survival cumulative metric determining sub-unit is configured to determine a maximum cumulative metric among cumulative metrics of all paths reaching the current joint state as the survival cumulative metric of the current joint state.

The survival signal sequence estimation determining sub-unit is configured to determine the signal sequence estimation of the farthest dispersion channel of each user in the source joint state corresponding to the survival cumulative metric as the signal sequence estimation of the survival farthest dispersion channel corresponding to each user in the current joint state.

The second obtaining unit 400 comprises a signal sequence estimation determining unit, an updating sub-unit and a combining sub-unit.

The signal sequence estimation determining unit is configured to use a signal sequence estimation of a nearest dispersion channel corresponding to each user in the current joint state as the signal sequence estimation of a corresponding user at the current moment.

The updating sub-unit is configured to update the current joint state based on the signal sequence estimation of the survival farthest dispersion channel corresponding to each user in the current joint state to obtain the updated joint state.

The combining sub-unit is configured to combine the signal sequence estimation of each user at each moment to obtain the signal sequence estimation of each user.

The updating sub-unit is further configured to shift the current joint state once from far to near based on the dispersion channel, and use the signal sequence estimation of the survival farthest dispersion channel corresponding to each user in the current joint state as a signal sequence estimation of the farthest dispersion channel of each user in the shifted current joint state.

In conclusion, in the method for joint detection in accordance with the embodiment of the present invention, a matched filtering signal corresponding to a received mixed signal is obtained, and Joint Maximum Likelihood Sequence Estimation (JMLSE) is performed based on the matched filtering signal to obtain a signal sequence estimation of each user, thus, in the meantime, the signal sequence estimation of each user can be demodulated from the received mixed signal. In addition, the embodiment of the present invention is applicable to not only joint detection for multiple users, but also a scene of interference suppression.

**Claims**

1. A method for joint detection using a trellis, the method comprising the following steps of:

    obtaining a matched filtering signal corresponding to a received mixed signal (S201), wherein the mixed signal contains information of one and/or a plurality of users;
    estimating, based on the matched filtering signal, a cumulative metric corresponding to each path reaching each joint state of the plurality of users at each time, wherein the joint state contains an estimate of a signal sequence of each dispersion channel of each user of the plurality users at a corresponding time (S202, S203, S204);
    **characterized by**
    obtaining, based on each estimated cumulative metric, a survival cumulative metric of each joint state at each time and an estimate of a signal sequence of a survival farthest dispersion channel corresponding to each user in each joint state at each time (S205); and
    obtaining, based on the survival cumulative metric of each joint state at each time and the estimate of the signal sequence of the survival farthest dispersion channel corresponding to each user in each joint state, an estimate of a signal sequence of each user (S206) ;

wherein the obtaining the estimate of the signal sequence of each user comprises the following steps of:

A, determining the current time as a maximum time, and determining a joint state corresponding to a maximum survival cumulative metric at the current time as the current joint state;

B, using estimate of a signal sequence of a nearest dispersion channel corresponding to each user in the determined current joint state as the estimate of the signal sequence of a corresponding user at the current time, and updating the current joint state based on the estimate of the signal sequence of the survival farthest dispersion channel corresponding to each user in the current joint state to obtain the updated joint state;

C, decreasing the current time and determining

whether the decreased time is greater than 0, and if yes, using the updated joint state as the current joint state, and returning to step B, otherwise, performing step D; and

D, combining the estimate of the signal sequence of each user at each time to obtain the estimate of the signal sequence of each user.

2. The method according to claim 1, wherein the estimating the cumulative metric corresponding to each path reaching each joint state at each time comprises:

performing Joint Maximum Likelihood Sequence Estimation, JMLSE, based on the received matched filtering signal to obtain a branch metric of each path reaching each joint state at each time; and

superimposing the branch metric of each path to a cumulative metric of a source joint state corresponding to the path to obtain the cumulative metric corresponding to each path reaching each joint state at each time.

3. The method according to claim 1, wherein the obtaining the survival cumulative metric of each joint state at each time and the estimate of the signal sequence of the survival farthest dispersion channel corresponding to each user in each joint state comprises:

determining a maximum cumulative metric among cumulative metrics of all paths reaching the current joint state as the survival cumulative metric of the current joint state; and

determining an estimate of a signal sequence of the farthest dispersion channel of each user in the source joint state corresponding to the survival cumulative metric as the estimate of the signal sequence of the survival farthest dispersion channel corresponding to each user in the current joint state.

4. A device for joint detection using a trellis, the device comprising:

a matched filtering unit (100) configured to receive a matched filtering signal corresponding to a received mixed signal, wherein the mixed signal contains information of one and/or a plurality of users;

an estimating unit (200) configured to estimate, based on the matched filtering signal, a cumulative metric corresponding to each path reaching each joint state at each time;

wherein the joint state contains an estimate of a signal sequence of each dispersion channel of each user at a corresponding time;

**characterized by**

a first obtaining unit (300) configured to obtain, based on each estimated cumulative metric, a survival cumulative metric of each joint state at each time and an estimate of a signal sequence of a survival farthest dispersion channel corresponding to each user in each joint state at each time; and

a second obtaining unit (400) configured to obtain, based on the survival cumulative metric of each joint state at each time and the estimate of the signal sequence of the survival farthest dispersion channel corresponding to each user in each joint state, an estimate of a signal sequence of each user;

wherein the second obtaining unit comprises:

a signal sequence estimation determining unit configured to use an estimate of a signal sequence of a nearest dispersion channel corresponding to each user in the current joint state as the estimate of the signal sequence of a corresponding user at the current time, wherein the current joint state is initially selected as the joint state corresponding to a maximum survival cumulative metric;

an updating sub-unit configured to update the current joint state based on the estimate of the signal sequence of the survival farthest dispersion channel corresponding to each user in the current joint state to obtain the updated joint state; and

a combining sub-unit configured to combine the estimate of the signal sequence of each user at each time to obtain the estimate of the signal sequence of each user.

**5.** The device according to claim 4, wherein the estimating unit comprises:

a branch metric estimating sub-unit configured to perform Joint Maximum Likelihood Sequence Estimation, JMLSE, based on the received matched filtering signal to obtain a branch metric of each path reaching each joint state at each time; and

a cumulative metric estimating sub-unit configured to superimpose the branch metric of each path to a cumulative metric of a source joint state corresponding to the path to obtain the cumulative metric corresponding to each path reaching each joint state at each time.

**6.** The device according to claim 4, wherein the first obtaining unit comprises:

a survival cumulative metric determining sub-unit configured to determine a maximum cumulative metric among cumulative metrics of all paths reaching the current joint state as the survival cumulative metric of the current joint state; and

a survival signal sequence estimation determining sub-unit configured to determine the signal sequence estimation of the farthest dispersion channel of each user in the source joint state corresponding to the survival cumulative metric as the estimate of the signal sequence of the survival farthest dispersion channel corresponding to each user in the current joint state.

**Patentansprüche**

**1.** Verfahren zur Verbindungsdetektion unter Verwendung eines Gitters, wobei das Verfahren die folgenden Schritte umfasst, dass:

ein Korrelationsfiltersignal beschafft wird (S201), das einem empfangenen gemischten Signal entspricht, wobei das gemischte Signal Informationen von einem und/oder mehreren Nutzern enthält;

beruhend auf dem Korrelationsfiltersignal eine kumulierte Metrik geschätzt wird, die jeder Strecke entspricht, welche jeden Verbindungsstatus der mehreren Nutzer zu jedem Zeitpunkt erreicht, wobei der Verbindungsstatus eine Schätzung einer Signalsequenz von jedem Dispersionskanal von jedem Nutzer der mehreren Nutzer zu einem entsprechenden Zeitpunkt enthält (S202, S203, S204);

**dadurch gekennzeichnet, dass**

beruhend auf jeder geschätzten kumulierten Metrik eine fortbestehende kumulierte Metrik von jedem Verbindungsstatus zu jedem Zeitpunkt und eine Schätzung einer Signalsequenz eines fernsten fortbestehende Dispersionskanals, der jedem Nutzer in jedem Verbindungsstatus zu jedem Zeitpunkt entspricht, beschafft werden (S205); und

beruhend auf der fortbestehenden kumulierten Metrik von jedem Verbindungsstatus zu jedem Zeitpunkt und auf der Schätzung der Signalsequenz des fernsten fortbestehenden Dispersionskanals, der jedem Nutzer in jedem Verbindungsstatus entspricht, eine Schätzung einer Signalsequenz von jedem Nutzer beschafft wird (S206);

wobei das Beschaffen der Schätzung der Signalsequenz von jedem Nutzer die folgenden Schritte umfasst, dass:

A, der aktuelle Zeitpunkt als ein maximaler Zeitpunkt bestimmt wird und ein Verbindungsstatus, der einer maximalen fortbestehenden kumulierten Metrik zu dem aktuellen Zeitpunkt entspricht, als der aktuelle Verbindungsstatus bestimmt wird;

B, eine Schätzung einer Signalsequenz eines nächstgelegenen Dispersionskanals, der jedem Nutzer in dem bestimmten aktuellen Verbindungsstatus entspricht, als die Schätzung der Signalsequenz eines entsprechenden Nutzers zu dem aktuellen Zeitpunkt verwendet wird, und der aktuelle Verbindungsstatus beruhend auf der Schätzung der Signalsequenz des fernsten fortbestehenden Dispersionskanals, der jedem Nutzer in dem aktuellen Verbindungsstatus entspricht, aktualisiert wird, um den aktualisierten Verbindungsstatus zu beschaffen;

C, der aktuelle Zeitpunkt verringert wird und ermittelt wird, ob der verringerte Zeitpunkt größer als Null ist, und wenn ja der aktualisierte Verbindungsstatus als der aktuelle Verbindungsstatus verwendet wird und zu Schritt B zurückgekehrt wird, andernfalls Schritt D ausgeführt wird; und

D, die Schätzungen der Signalsequenz von jedem Nutzer zu jedem Zeitpunkt kombiniert werden, um die Schätzung der Signalsequenz von jedem Nutzer zu beschaffen.

2. Verfahren nach Anspruch 1, wobei das Schätzen der kumulierten Metrik, die jeder Strecke entspricht, die jeden Verbindungsstatus zu jedem Zeitpunkt erreicht, umfasst, dass:

eine Joint Maximum Likelihood Sequence Schätzung, JMLSE, beruhend auf dem empfangenen Korrelationsfiltersignal ausgeführt wird, um eine Zweigmetrik von jeder Strecke zu beschaffen, die jeden Verbindungsstatus zu jedem Zeitpunkt erreicht; und

die Zweigmetrik jeder Strecke einer kumulierten Metrik eines Quellen-Verbindungsstatus, der der Strecke entspricht, überlagert wird, um die kumulierte Metrik zu beschaffen, welche jeder Strecke entspricht, die jeden Verbindungsstatus zu jedem Zeitpunkt erreicht.

3. Verfahren nach Anspruch 1, wobei das Beschaffen der fortbestehenden kumulierten Metrik von jedem Verbindungsstatus zu jedem Zeitpunkt und der Schätzung der Signalsequenz des fernsten fortbestehenden Dispersionskanals, der jedem Nutzer in jedem Verbindungsstatus entspricht, umfasst, dass:

eine maximale kumulierte Metrik aus kumulierten Metriken von allen Strecken, welche den aktuellen Verbindungsstatus erreichen, als die fortbestehende kumulierte Metrik des aktuellen Verbindungsstatus bestimmt wird; und

eine Schätzung einer Signalsequenz des fernsten Dispersionskanals von jedem Nutzer in dem Quellen-Verbindungsstatus, der der fortbestehenden kumulierten Metrik entspricht, als die Schätzung der Signalsequenz des fernsten fortbestehenden Dispersionskanals bestimmt wird, der jedem Nutzer in dem aktuellen Verbindungsstatus entspricht.

4. Vorrichtung zur Verbindungsdetektion unter Verwendung eines Gitters, wobei die Vorrichtung umfasst:

eine Korrelationsfiltereinheit (100), die ausgestaltet ist, um ein Korrelationsfiltersignal zu empfangen, das einem empfangenen gemischten Signal entspricht, wobei das gemischte Signal Informationen von einem und/oder mehreren Nutzern enthält;

eine Schätzeinheit (200), die ausgestaltet ist, um beruhend auf dem Korrelationsfiltersignal eine kumulierte Metrik zu schätzen, die jeder Strecke entspricht, die jeden Verbindungsstatus zu jedem Zeitpunkt erreicht; wobei der Verbindungsstatus eine Schätzung einer Signalsequenz von jedem Dispersionskanal von jedem Nutzer zu einem entsprechenden Zeitpunkt enthält;

**gekennzeichnet durch**

eine erste Beschaffungseinheit (300), die ausgestaltet ist, um beruhend auf jeder geschätzten kumulierten Metrik eine fortbestehende kumulierte Metrik von jedem Verbindungsstatus zu jedem Zeitpunkt und eine Schätzung einer Signalsequenz eines fernsten fortbestehenden Dispersionskanals, der jedem Nutzer in jedem Verbindungsstatus zu jedem Zeitpunkt entspricht, zu beschaffen; und

eine zweite Beschaffungseinheit (400), die ausgestaltet ist, um beruhend auf der fortbestehenden kumulierten Metrik von jedem Verbindungsstatus zu jedem Zeitpunkt und auf der Schätzung der Signalsequenz des fernsten fortbestehenden Dispersionskanals, der jedem Nutzer in jedem Verbindungsstatus entspricht, eine Schätzung einer Signalsequenz von jedem Nutzer zu beschaffen;

wobei die zweite Beschaffungseinheit umfasst:

eine Einheit zum Bestimmen einer Signalsequenzschätzung, die ausgestaltet ist, um eine Schätzung einer Signalsequenz eines nächstgelegenen Dispersionskanals, der jedem Nutzer in dem aktuellen Verbindungsstatus entspricht, als die Schätzung der Signalsequenz eines entsprechenden Nutzers zu dem aktuellen Zeitpunkt zu verwenden, wobei der aktuelle Verbindungsstatus anfänglich als der Verbindungsstatus gewählt wird, der einer maximalen fortbestehenden kumulierten Metrik entspricht;

eine Aktualisierung-Teileinheit, die ausgestaltet ist, um den aktuellen Verbindungsstatus beruhend auf der Schätzung der Signalsequenz des fernsten fortbestehenden Dispersionskanals, der jedem Nutzer in dem aktuellen Verbindungsstatus entspricht, zu aktualisieren, um den aktualisierten Verbindungsstatus zu beschaffen; und

eine Kombinations-Teileinheit, die ausgestaltet ist, um die Schätzung der Signalsequenz von jedem Nutzer zu jedem Zeitpunkt zu kombinieren, um die Schätzung der Signalsequenz von jedem Nutzer zu beschaffen.

5. Vorrichtung nach Anspruch 4, wobei die Schätzeinheit umfasst:

eine Teileinheit zum Schätzen einer Zweigmetrik, die ausgestaltet ist, um eine Joint Maximum Likelihood Sequence Schätzung, JMLSE, beruhend auf dem empfangenen Korrelationsfiltersignal auszuführen, um eine Zweigmetrik von jeder Strecke zu beschaffen, die jeden Verbindungsstatus zu jedem Zeitpunkt erreicht; und eine Teileinheit zum Schätzen einer kumulierten Metrik, die ausgestaltet ist, um die Zweigmetrik von jeder Strecke einer kumulierten Metrik eines Quellen-Verbindungsstatus, der der Strecke entspricht, zu überlagern, um die kumulierte Metrik zu beschaffen, die jeder Strecke entspricht, welche jeden Verbindungsstatus zu jedem Zeitpunkt erreicht.

6. Vorrichtung nach Anspruch 4, wobei die erste Beschaffungseinheit umfasst:

eine Teileinheit zum Bestimmen einer fortbestehenden kumulierten Metrik, die ausgestaltet ist, um eine maximale kumulierte Metrik aus kumulierten Metriken von allen Strecken, die den aktuellen Verbindungsstatus erreichen, als die fortbestehende kumulierte Metrik des aktuellen Verbindungsstatus zu bestimmen; und eine Teileinheit zum Bestimmen einer Schätzung einer fortbestehenden Signalsequenz, die ausgestaltet ist, um die Signalsequenzschätzung des fernsten Dispersionskanals von jedem Nutzer in dem Quellen-Verbindungsstatus, der der fortbestehenden kumulierten Metrik entspricht, als die Schätzung der Signalsequenz des fernsten fortbestehenden Dispersionskanals zu bestimmen, der jedem Nutzer in dem aktuellen Verbindungsstatus entspricht.

**Revendications**

1. Procédé de détection conjointe à l'aide d'un treillis, le procédé comprenant les étapes suivantes :

obtenir un signal de filtrage adapté correspondant à un signal mélangé reçu (S201), dans lequel le signal mélangé contient des informations d'un et/ou d'une pluralité d'utilisateurs ; estimer, sur la base du signal de filtrage adapté, une métrique cumulative correspondant à chaque chemin atteignant chaque état conjoint de la pluralité d'utilisateurs à chaque instant, dans lequel l'état conjoint contient une estimation d'une séquence de signaux de chaque canal de dispersion de chaque utilisateur de la pluralité d'utilisateurs à un instant correspondant (S202, S203, S204) ;
**caractérisé par**
obtenir, sur la base de chaque métrique cumulative estimée, une métrique cumulative de survie de chaque état conjoint à chaque instant et une estimation d'une séquence de signaux d'un canal de dispersion de survie le plus éloigné correspondant à chaque utilisateur dans chaque état conjoint à chaque instant (S205) ; et
obtenir, sur la base de la métrique cumulative de survie de chaque état conjoint à chaque instant et de l'estimation de la séquence de signaux du canal de dispersion le plus éloigné de survie correspondant à chaque utilisateur dans chaque état conjoint, une estimation d'une séquence de signaux de chaque utilisateur (S206) ;
dans lequel l'obtention de l'estimation de la séquence de signaux de chaque utilisateur comprend les étapes suivantes :

A, déterminer le temps actuel en tant que temps maximal, et déterminer un état conjoint correspondant à une métrique cumulative de survie maximale au temps actuel en tant qu'état conjoint actuel ;
B, utiliser l'estimation d'une séquence de signaux d'un canal de dispersion le plus proche correspondant à chaque utilisateur dans l'état conjoint actuel déterminé en tant qu'estimation de la séquence de signaux d'un utilisateur correspondant au temps actuel, et mettre à jour l'état conjoint actuel sur la base de l'estimation de la séquence de signaux du canal de dispersion le plus éloigné de survie correspondant à chaque utilisateur dans l'état conjoint actuel pour obtenir l'état conjoint mis à jour ;
C, diminuer le temps actuel et déterminer si le temps diminué est supérieur à 0, et si c'est le cas, utiliser l'état conjoint mis à jour en tant qu'état conjoint actuel, et revenir à l'étape B, sinon exécuter l'étape D ; et
D, combiner l'estimation de la séquence de signaux de chaque utilisateur à chaque instant pour obtenir l'estimation de la séquence de signaux de chaque utilisateur.

2. Procédé selon la revendication 1, dans lequel l'estimation de la métrique cumulative correspondant à chaque chemin atteignant chaque état conjoint à chaque instant comprend de :

effectuer une estimation de séquence de vraisemblance maximale conjointe, JMLSE, sur la base du signal de filtrage adapté reçu pour obtenir une métrique de branche de chaque chemin atteignant chaque état conjoint à chaque instant ; et

superposer la métrique de branche de chaque chemin à une métrique cumulative d'un état conjoint source correspondant au chemin pour obtenir la métrique cumulative correspondant à chaque chemin atteignant chaque état conjoint à chaque instant.

3. Procédé selon la revendication 1, dans lequel l'obtention de la métrique cumulative de survie de chaque état conjoint à chaque instant et l'estimation de la séquence de signaux du canal de dispersion de survie le plus éloigné correspondant à chaque utilisateur dans chaque état conjoint comprennent de :

déterminer une métrique cumulative maximale parmi des métriques cumulatives de tous les chemins atteignant l'état conjoint actuel en tant que métrique cumulative de survie de l'état conjoint actuel ; et
déterminer une estimation d'une séquence de signaux du canal de dispersion le plus éloigné de chaque utilisateur dans l'état conjoint source correspondant à la métrique cumulative de survie en tant qu'estimation de la séquence de signaux du canal de dispersion le plus éloigné de survie correspondant à chaque utilisateur dans l'état conjoint actuel.

4. Dispositif de détection conjointe à l'aide d'un treillis, le dispositif comprenant :

une unité de filtrage adapté (100) configurée pour recevoir un signal de filtrage adapté correspondant à un signal mélangé reçu, dans lequel le signal mélangé contient des informations d'un et/ou d'une pluralité d'utilisateurs ;
une unité d'estimation (200) configurée pour estimer, sur la base du signal de filtrage adapté, une métrique cumulative correspondant à chaque chemin atteignant chaque état conjoint à chaque instant ; dans lequel l'état conjoint contient une estimation d'une séquence de signaux de chaque canal de dispersion de chaque utilisateur à un instant correspondant ;
**caractérisé par**
une première unité d'obtention (300) configurée pour obtenir, sur la base de chaque métrique cumulative estimée, une métrique cumulative de survie de chaque état conjoint à chaque instant et une estimation d'une séquence de signaux d'un canal de dispersion de survie le plus éloigné correspondant à chaque utilisateur dans chaque état conjoint à chaque instant ; et
une seconde unité d'obtention (400), configurée pour obtenir, sur la base de la métrique cumulative de survie de chaque état conjoint à chaque instant et de l'estimation de la séquence de signaux du canal de dispersion le plus éloigné de survie correspondant à chaque utilisateur dans chaque état conjoint, une estimation d'une séquence de signaux de chaque utilisateur ;
dans lequel la seconde unité d'obtention comprend :

une unité de détermination d'estimation de séquence de signaux configurée pour utiliser une estimation d'une séquence de signaux d'un canal de dispersion le plus proche correspondant à chaque utilisateur dans l'état conjoint actuel en tant qu'estimation de la séquence de signaux d'un utilisateur correspondant au temps actuel, dans lequel l'état conjoint actuel est sélectionné initialement en tant qu'état conjoint correspondant à une métrique cumulative de survie maximale ;
une sous-unité de mise à jour configurée pour mettre à jour l'état conjoint actuel sur la base de l'estimation de la séquence de signaux du canal de dispersion le plus éloigné de survie correspondant à chaque utilisateur dans l'état conjoint actuel pour obtenir l'état conjoint mis à jour ; et
une sous-unité de combinaison configurée pour combiner l'estimation de la séquence de signaux de chaque utilisateur à chaque instant pour obtenir l'estimation de la séquence de signaux de chaque utilisateur.

5. Dispositif selon la revendication 4, dans lequel l'unité d'estimation comprend :

une sous-unité d'estimation de métrique de branche configurée pour effectuer une estimation de séquence de vraisemblance maximale conjointe, JMLSE, sur la base du signal de filtrage adapté reçu pour obtenir une métrique de branche de chaque chemin atteignant chaque état conjoint à chaque instant ; et
une sous-unité d'estimation de métrique cumulative configurée pour superposer la métrique de branche de chaque chemin à une métrique cumulative d'un état conjoint source correspondant au chemin pour obtenir la métrique cumulative correspondant à chaque chemin atteignant chaque état conjoint à chaque instant.

6. Dispositif selon la revendication 4, dans lequel la première unité d'obtention comprend :

une sous-unité de détermination de métrique cumulative de survie configurée pour déterminer une métrique cumulative maximale parmi des métriques cumulatives de tous les chemins atteignant l'état conjoint actuel en tant que métrique cumulative de survie de l'état conjoint actuel ; et

une sous-unité de détermination d'estimation de séquence de signaux de survie configurée pour déterminer l'estimation de séquence de signaux du canal de dispersion le plus éloigné de chaque utilisateur dans l'état conjoint source correspondant à la métrique cumulative de survie en tant qu'estimation de la séquence de signaux du canal de dispersion le plus éloigné de survie correspondant à chaque utilisateur dans l'état conjoint actuel.

( State ) = $2i*2^{L-1} + 2j$

$r_{k-1}^{(0)} r_{k-2}^{(0)} \cdots r_{k-(L-2)}^{(0)} 0; r_{k-1}^{(1)} r_{k-2}^{(1)} \cdots r_{k-(L-2)}^{(1)} 0$

( State ) = $2i*2^{L-1} + (2j+1)$

$r_{k-1}^{(0)} r_{k-2}^{(0)} \cdots r_{k-(L-2)}^{(0)} 0; r_{k-1}^{(1)} r_{k-2}^{(1)} \cdots r_{k-(L-2)}^{(1)} 1$

( State ) = $(2i+1)*2^{L-1} + 2j$

$r_{k-1}^{(0)} r_{k-2}^{(0)} \cdots r_{k-(L-2)}^{(0)} 1; r_{k-1}^{(1)} r_{k-2}^{(1)} \cdots r_{k-(L-2)}^{(1)} 0$

( State ) = $(2i+1)*2^{L-1} + (2j+1)$

$r_{k-1}^{(0)} r_{k-2}^{(0)} \cdots r_{k-(L-2)}^{(0)} 1; r_{k-1}^{(1)} r_{k-2}^{(1)} \cdots r_{k-(L-2)}^{(1)} 1$

( State ) = $i*2^{L-1} + j$

$0 r_{k-1}^{(0)} r_{k-2}^{(0)} \cdots r_{k-(L-2)}^{(0)}; 0 r_{k-1}^{(1)} r_{k-2}^{(1)} \cdots r_{k-(L-2)}^{(1)}$

( State ) = $i*2^{L-1} +(j+16)$

$0 r_{k-1}^{(0)} r_{k-2}^{(0)} \cdots r_{k-(L-2)}^{(0)}; 1 r_{k-1}^{(1)} r_{k-2}^{(1)} \cdots r_{k-(L-2)}^{(1)}$

( State ) = $(i+16)*2^{L-1} + j$

$1 r_{k-1}^{(0)} r_{k-2}^{(0)} \cdots r_{k-(L-2)}^{(0)}; 0 r_{k-1}^{(1)} r_{k-2}^{(1)} \cdots r_{k-(L-2)}^{(1)}$

( State ) = $(i+16)*2^{L-1} + (j+16)$

$1 r_{k-1}^{(0)} r_{k-2}^{(0)} \cdots r_{k-(L-2)}^{(0)}; 1 r_{k-1}^{(1)} r_{k-2}^{(1)} \cdots r_{k-(L-2)}^{(1)}$

FIG. 1

| | |
|---|---|
| Receiving a mixed signal | 201 |
| Performing channel estimation on the received mixed signal to obtain channel estimation parameters | 202 |
| Performing matched filtering calculation based on the channel estimation parameters to obtain a corresponding matched filtering signal | 203 |
| Estimating the cumulative metric corresponding to each path reaching each joint state at each moment | 204 |
| Obtaining each survival cumulative metric and the signal sequence estimation of each survival farthest dispersion channel | 205 |
| Obtaining the signal sequence estimation of each user | 206 |

FIG. 2

```
┌─────────────────────────────────────┐
│    Receiving a mixed signal containing   │      301
│       information of two users        │
└─────────────────────────────────────┘
                    │
                    ▼
┌─────────────────────────────────────┐
│  Performing channel estimation on the received  │      302
│       mixed signal to obtain channel     │
│          estimation parameters        │
└─────────────────────────────────────┘
                    │
                    ▼
┌─────────────────────────────────────┐
│      Obtaining a channel autocorrelation   │      303
│   signal, cross-correlation signal and signal │
│  matched filtering output signal of the two users │
└─────────────────────────────────────┘
                    │
                    ▼
┌─────────────────────────────────────┐
│  Obtaining each survival cumulative metric and the  │      304
│  signal sequence estimation of each survival farthest │
│           dispersion channel           │
└─────────────────────────────────────┘
                    │
                    ▼
┌─────────────────────────────────────┐
│        Obtaining the signal sequence      │      305
│        estimation of each user          │
└─────────────────────────────────────┘
```

FIG. 3

```
   ┌─ 100          ┌─ 200          ┌─ 300          ┌─ 400
┌──────────┐   ┌──────────┐   ┌──────────┐   ┌──────────┐
│          │   │          │   │          │   │          │
│ Matched  │   │Estimating│   │   First   │   │  Second   │
│filtering unit│──│  unit    │──│obtaining unit│──│obtaining unit│
│          │   │          │   │          │   │          │
└──────────┘   └──────────┘   └──────────┘   └──────────┘
```

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6144710 A

### Non-patent literature cited in the description

- **LOZANO A et al.** Adaptive MLSE receiver for dual-band IS-136 TDMA, PIMRC' 97. *THE 8TH IEEE INTERNATIONAL SYMPOSIUM ON HELSINKI,* 01 September 1997, vol. 3, 816-820
- Joint MLSE Receiver with Dynamic channel description. **JIUNN-TSAIR CHEN et al.** IEEE JOURNAL ON SELECTED AREAS IN COMMUNICATIONS. IEEE SERVICE CENTER, 01 December 1998, vol. 16
- HENDRIK SCHOENEICH AND PERTER A HOEHER: Signal Antenna Cochannel Interference Cancellation in Asynchronous TDMA Systems. *PROCEEDINGS OF BAIONA WORKSHOP ON SINGAL PROCESSING INCOMMUNICATIONS,* 08 September 2003, 157-162
- **RANTA P A et al.** CO-CHANNEL INTERFERENCE CANCELLING RECEIVER FOR TDMA MOBILE SYSTEMS. *COMMUNICATIONS INTERNATIONAL CONFERENCE ON COMMUNICATIONS SEATTLE,* 18 June 1995, vol. 1, 17-21